# FASCICULE DE BREVET EUROPEEN

(11) **EP 1 141 730 B1**
(45) Date de publication et mention de la délivrance du brevet: **12.01.2005**
(21) Numéro de dépôt: 99958290.1
(22) Date de dépôt: 10.12.1999
(51) Int. Cl.: G01P 15/09, G01P 15/00, B60C 23/06, G01L 19/00

(54) **DETECTEUR D'ACCELERATION DE PNEUMATIQUE DE VEHICULE AUTOMOBILE**
BESCHLEUNIGUNGSAUFNEHMER FÜR AUTOREIFEN
MOTOR VEHICLE TYRE ACCELERATION SENSOR

(30) Priorité: 11.12.1998 FR 9815667
(43) Date de publication de la demande: 10.10.2001
(73) Titulaire: JOHNSON CONTROLS AUTOMOTIVE ELECTRONICS, 95526 Cergy Pontoise Cédex (FR)
(72) Inventeur: DELAPORTE, Françis, F-95520 Osny (FR)
(74) Mandataire: Bloch, Gérard
(86) Numéro de dépôt international: PCT/FR1999/003084
(87) Numéro de publication internationale: WO 2000/036424

(56) Documents cités:
- DE-A- 4 125 467
- DE-A- 4 303 583
- DE-A- 19 548 759

## Description

Pour assurer la sécurité d'un véhicule automobile, on équipe chaque roue de celui-ci d'un capteur de pression logé dans le pneumatique et relié par radio à un calculateur de surveillance de l'état des pneumatiques, situé dans l'habitacle et signalant toute anomalie. Le capteur étant inaccessible, il est alimenté par une pile dont il faut prolonger au mieux la durée de vie. Pour cela, le capteur comporte une temporisation de veille, à très faible consommation, qui ne le réveille que cycliquement pour effectuer une mesure et émettre une alarme le cas échéant.

Lorsque le véhicule est en stationnement, il est inutile d'émettre des alarmes répétitives, puisqu'il n'y a pas de risque d'accident. Ce capteur fonctionne alors à un rythme ralenti, à cycles allongés, et il ne passe au rythme normal que lorsqu'un détecteur d'accélération associé détecte la rotation de la roue.

On utilisait jusqu'à maintenant, comme détecteur d'accélération, une lame flexible montée dans une ampoule scellée de relais Reed, logée dans le pneumatique et solidaire du capteur de pression fixé à la valve. La lame établissait un contact commandant le passage du capteur de pression au rythme normal lorsque se manifestait l'accélération centrifuge de rotation de la roue. Dans d'autres applications, une ampoule Reed de détection d'accélération est de même logée dans le pneumatique avec un capteur de pression, mais elle sert alors à fournir par radio des mesures exploitées par ailleurs.

L'ampoule Reed présente cependant l'inconvénient d'être relativement coûteuse et de mal supporter les chocs que subissent les roues.

La présente invention vise ainsi à offrir un détecteur d'accélération qui soit peu coûteux et qui présente une robustesse améliorée.

A cet effet, l'invention concerne un détecteur d'accélération de pneumatique de véhicule automobile comportant une membrane élastiquement déformable et, solidaires de la membrane, une masse d'épreuve, pour la déformer sous l'effet d'une accélération, une jauge de contrainte d'accélération sensible aux déformations de la membrane sous l'effet d'une force d'accélération exercée par la masse d'épreuve, caractérisé par le fait qu'il comporte une jauge, de contrainte de pression sensible à la pression du pneumatique, pour que le détecteur d'accélération constitue également un capteur de pression, et une chaîne de mesure de pression et une chaîne de détection d'accélération intégrées, au moins en partie, dans un circuit intégré, la chaîne de détection d'accélération étant agencée pour commander l'activation de la chaîne de mesure de pression.

On remarquera que DE 4125467 enseigne un détecteur d'accélération qui présente aussi une fonction alternative de capteur de pression mais avec une seule jauge de contrainte.

DE 4303583 enseigne un détecteur d'accélération et un capteur de pression sur une même puce.

L'invention est remarquable, par rapport à cet art antérieur, par le fait que la chaîne de mesure de pression est activée sous la commande de la chaîne de détection d'accélération, pour ainsi parfaitement résoudre le problème présenté ci-dessus.

Avantageusement, le détecteur est constitué d'un composant disposé dans un boîtier creux étanche fermé par celle-ci, la membrane étant en silicium.

L'invention sera mieux comprise à l'aide de la description suivante de deux formes de réalisation avantageuses du détecteur d'accélération de l'invention, associé dans ces exemples à un capteur de pression, en référence au dessin annexé, sur lequel :
- les figures 1 et 2 sont des vues schématiques en coupe du capteur-détecteur des deux formes de réalisation respectives, et
- la figure 3 est un schéma par blocs fonctionnels des circuits électroniques du capteur de pression et du détecteur d'accélération, de l'une et l'autre des deux formes de réalisation, qui commande ici le rythme du détecteur de pression, auquel il est entièrement intégré dans cet exemple.

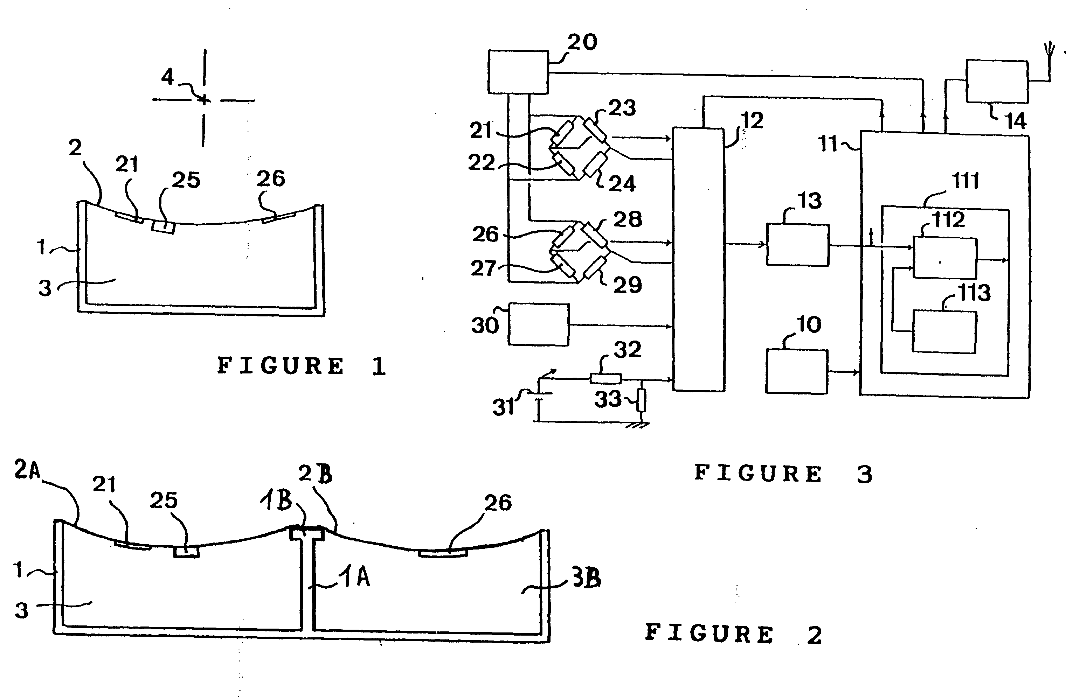

Sur la figure 1, la référence 1 désigne un boîtier creux de circuit intégré formant une enceinte étanche 3, dont une face est constituée par une membrane 2 déformable fixée en pourtour au bord du boîtier 1. La membrane 2 est ici constituée d'une couche élastiquement déformable en silicium de quelques microns d'épaisseur. Un capot perméable de protection mécanique de celle-ci peut être prévu.

Dans cet exemple, et comme cela est expliqué plus loin, le détecteur d'accélération de rotation est intégré avec un capteur de pression utilisant aussi la membrane 2 et monté dans le pneumatique d'une roue de véhicule automobile. De ce fait, la membrane 2 n'est pas ici une simple bande élastiquement déformable ou poutre, qui suffirait pour un tel détecteur d'accélération, mais au contraire, dans cet exemple, elle ferme de façon étanche, la cavité du boîtier 1, pour se déformer sous l'effet de la pression d'un fluide externe, ici l'air du pneumatique qui contient le détecteur-capteur représenté, fixé à la valve.

En ce qui concerne la détection de l'accélération due à la rotation de la roue, la membrane 2 porte une jauge de contrainte 21, solidaire de la membrane 2 et sensible à ses déformations de contrainte, ainsi qu'une masse d'épreuve 25 elle aussi solidaire de la membrane 2 pour la déformer sous l'effet d'une accélération due à la rotation de la roue. En retour, la jauge 21 subit une contrainte de déformation et présente dans cet exemple une variation d'impédance correspondante. La jauge de contrainte 21 comporte ici, sérigraphiée sur la face interne de la membrane 2, une résistance sous forme de bande en couche épaisse qui suit les déformations de celle-ci et dont la résistance varie, de ce fait, selon une loi connue en fonction de l'accélération. Cette loi peut être déterminée par essai en usine et mémorisée dans le détecteur. De préférence comme ici, la masse 25 est relativement proche de la jauge 21, pour avoir une efficacité optimale.

La membrane 2 porte de même dans cet exemple, du côté interne à la cavité 3, une autre jauge de contrainte 26, ici identique à la jauge 21, servant à la mesure de la pression de l'air dans le pneumatique, évoquée plus haut.

Comme le montre la figure 3, la résistance 21 est associée à un circuit de mesure de son impédance, ici sa résistance, comportant un pont équilibré, du genre Wheastone, d'éléments 22, 23 et 24 à impédances déterminées en fonction de celle de la jauge 21 au repos. Les produits des valeurs des résistances opposées sont égales : [R21] x [R24] = [R22] x [R23]. Il aurait aussi pu être prévu que la résistance 24 soit une telle jauge, pour augmenter la sensibilité. Une source 20, ici de tension continue, alimente une diagonale du pont 21-24, dont les extrémités de l'autre diagonale sont reliées, à travers ici un circuit multiplexeur 12, à un convertisseur analogique/numérique 13 (CAN). Une base de temps 10 assure le séquencement du fonctionnement du détecteur-capteur. Un microprocesseur 11, à fonctionnement rythmé par la base de temps 10, commande l'ensemble des circuits ci-dessus et reçoit les mesures du CAN 13 pour les traiter et les exploiter localement et/ou les émettre par un circuit radio 14 de contrôle, qu'il commande. Dans cet exemple, les mesures d'accélération sont utilisées localement pour asservir le capteur de pression, si bien que seules les mesures de ce dernier, ou l'alarme qui peut en résulter, sont émises par l'émetteur radio 14. Cependant, dans d'autres exemples, le détecteur d'accélération pourrait servir d'odomètre et alors ses mesures seraient émises par radio.

Le microprocesseur 11 comporte un circuit 111 de veille et de réveil du capteur de pression, circuit 111 qui reçoit, du convertisseur 13, les mesures d'accélération pour ralentir, par exemple de 6 secondes (rythme d'alarme de pression) à une minute (rythme normal), le rythme des mesures de pression (26) lorsque la vitesse de rotation de la roue, et donc l'accélération mesurée, est inférieure à un seuil déterminé et même ralentir à un cycle de une heure en l'absence de rotation. Le circuit 111 comporte un comparateur 112 recevant, sur une voie, les valeurs mesurées et, sur l'autre voie, une valeur de seuil de dérive de résistance provenant d'une mémoire 113. La jauge 26 est de même insérée dans un pont 26, 27, 28 et 29 alimenté comme le pont 21-24 et de même relié en sortie à une voie du multiplexeur 12. Outre les deux voies pour les deux ponts ci-dessus, le multiplexeur 12 comporte une troisième voie de mesure, reliée à un capteur de température 31 pour la correction des mesures de pression et d'accélération, et une quatrième voie de mesure, reliée au point milieu d'un pont diviseur 32, 33 polarisé par une pile 31 qui alimente l'ensemble des circuits. Le microprocesseur 11 est intégré dans le boîtier creux étanche 1 de même ici que les divers autres circuits électriques, pour former un circuit à la demande (ASIC) constituant le capteur-détecteur.

Le fonctionnement de ces circuits va maintenant être expliqué plus en détails.

Le capteur-détecteur représenté est orienté, en position opérationnelle, de façon telle que la rotation de la roue qui le porte exerce une force d'accélération centrifuge déformant la membrane 2, c'est-à-dire ayant une composante verticale sur la figure 1. Si l'on suppose par exemple que l'axe 4 de la roue (représenté à une distance très réduite, non à l'échelle) est situé au dessus du capteur-détecteur de la figure 1, la masse 25 fonctionnellement associée à la jauge 21 subit en pareil cas une force centrifuge dirigée vers le bas, vers le fond rigide de l'enceinte 3. Le volume limité par celle-ci peut être mis en dépression ou simplement rempli d'une masse de gaz déterminée, donc à une pression constante au repos, hormis les effets de la température, qui sont corrigés par calcul.

A cette force centrifuge, proportionnelle à la vitesse de rotation, s'ajoute une modulation périodique à chaque tour de roue, due à la gravité et d'amplitude constante.

La membrane 2, solidaire de la jauge 21 de masse déterminée, est entraînée localement par celle-ci et se distend et, par là-même, distend la résistance en couche épaisse 21, ici en forme de bande, solidaire sur toute sa longueur de la membrane 2.

La variation de résistance qui en résulte est mesurée et numérisée par le CAN 13 et transmise au circuit de veille 111 du microprocesseur 11. Dans le circuit 111, la mesure de la valeur de la résistance 21, en fait ici sa dérive, est comparée (112) à la valeur de seuil (113) ci-dessus, pour passer, ou rester, à un rythme lent de réveils pour des mesures cycliques de pression si le seuil n'est pas atteint, cela entraînant ici un réglage du cycle de mesure de pression à une période de 1 heure. Le détecteur d'accélération active ainsi, au rythme voulu, le capteur de pression. Le réglage de la période des cycles de mesure de pression s'effectue en chargeant une valeur correspondante dans une temporisation, par exemple un circuit décompteur, qui lance un cycle de mesure de pression à l'échéance de la temporisation et qui se réarme pour le cycle suivant. A chaque mesure d'accélération ou de pression, le microprocesseur 11 active la source 20 (par un interrupteur non représenté) pour alimenter les ponts 21-24 et 26-29 un court instant et il active aussi le CAN 13 et le comparateur 112. Le microprocesseur 11 recueille à chaque fois la mesure de la résistance, en fait ici sa variation, de la jauge de pression 26, qui traduit la pression du pneumatique. Les cycles de mesure d'accélération peuvent être indépendants de ceux de mesure de pression et leur consommation reste limitée puisqu'ils ne sont pas liés à une émission radio.

Les mesures de pression sont émises par l'émetteur 14 ou traitées localement par le microprocesseur 11, qui émet alors éventuellement une alarme radio si un seuil de pression haut ou bas est franchi, et accélère, à la période de 6 s ci-dessus, le rythme des mesures de pression, l'absence de rotation pouvant cependant commander un ralentissement de ce rythme.

Il existe une influence mutuelle entre les deux variables, pression et accélération, due au fait que, ici, il n'y a pas, séparément, une poutre (telle qu'une membrane) et une membrane étanche propres aux jauges 21 et 26 respectives mais que la membrane 2 est ici commune aux deux jauges 21 et 26. Cette influence mutuelle peut être limitée en disposant les jauges 21, 26 à distance l'une de l'autre, c'est-à-dire en fait en espaçant la jauge 26 de la masse 25. Ainsi, un effet d'enfoncement dû à la force centrifuge subie par la masse 25, qui est surtout perceptible dans une zone limitée de la membrane 2 englobant la jauge 21, aura un effet d'autant plus limité sur l'autre jauge 26 que ces deux jauges 21 et 26 auront été mutuellement écartées d'une distance maximale, sans cependant être placées trop près du bord rigide de fixation de la membrane 2, qui limite les déformations à son niveau. Par exemple, l'écartement mutuel des deux jauges 21 et 26, ou entre cette dernière et la masse 25, sera de préférence supérieur à la moitié de la plus grande dimension de la membrane 2.

Comme, au contraire, la pression agit sur toute la surface de la membrane 2, le microprocesseur 11 peut, d'après la mesure de pression par la jauge 26, en déduire la déformation parasite due à la pression, ou dérive de résistance, de la jauge 21 et corriger ainsi la mesure de force centrifuge, donc de vitesse de rotation puisque la valeur de la masse 25 et son rayon de gyration sont connus. Inversement, l'effet, même limité, de la masse 25 sur la déformation de la jauge 26 peut de même être estimé en usine pour établir une table de correction de la mesure de pression.

Comme, en outre, la gravité module, à chaque tour de roue, la mesure d'accélération fournie par la jauge 21, le microprocesseur 11 peut mesurer la vitesse de rotation de la roue (fonction odomètre) et la comparer directement à un seuil pour ralentir ou non le rythme des mesures de pression. On remarquera que l'amplitude de cette modulation, indépendante de la vitesse de rotation, suffit en elle-même à caractériser l'effet de la gravité en cas de rotation de la roue. On peut donc ainsi détecter l'existence d'une rotation, ce qui est le but recherché (véhicule en mouvement et donc cycles de 1 minute). La mesure de la fréquence correspondante fournit en complément la valeur de la vitesse de rotation, pour éventuellement ici régler les cycles selon plusieurs seuils. Une telle mesure de fréquence peut être réalisée par le microprocesseur 11 avec un logiciel de filtrage passe-bande à plusieurs voies adjacentes, formant un banc de filtres couvrant la plage de fréquences voulue.

La mesure, par la seule jauge d'accélération 21, de la composante alternative des mesures de déformation de la membrane 2 sous l'effet de la masse 25 suffit donc à elle seule pour la détection et la mesure de la vitesse de rotation de la roue. Un tel détecteur de rotation, détectant en fait la position angulaire de la roue, pourrait donc encore fonctionner même s'il était placé sur l'axe de rotation d'un élément rotatif, donc sans subir de force centrifuge.

L'information de vitesse de rotation ainsi acquise peut d'ailleurs être utilisée par le microprocesseur 11 pour déterminer la valeur de mesure de force centrifuge que devrait fournir la jauge 21 à la vitesse considérée, compte tenu de la masse 25, de son rayon de gyration et des caractéristiques mécaniques de la membrane 2 et de l'enceinte 3. Une telle table de correspondance vitesse/dérive de résistance peut en pratique être établie en usine, avec une pression nominale du pneumatique, et mémorisée dans le microprocesseur 11.

En exploitation, le microprocesseur 11 peut alors comparer, pour la vitesse déterminée par la gravité, la valeur attendue de mesure d'accélération de la jauge 21 à celle effectivement mesurée. L'écart entre ces deux valeurs représente l'influence d'une variation de pression.

De ce fait, on pourrait alors, en variante, ne prévoir qu'une seule jauge de détection et/ou mesure d'accélération, associée fonctionnellement à une masse 25 quelconque mais suffisante pour déformer la membrane 2. La composante alternative de la variation de résistance de la jauge unique permettrait d'en déduire, d'après la table ci-dessus, la composante "continue" théorique due à la rotation afin de la comparer (la soustraire) à la composante "continue" effectivement mesurée, pour en déduire la pression. Par composante "continue", on entend une valeur qui ne varie qu'avec des cycles beaucoup plus longs que la période de rotation de la roue, c'est-à-dire des cycles d'accélération ou décélération progressive du véhicule comportant la roue, donc sur un grand nombre de tours de roue.

Le second exemple de réalisation du détecteur d'accélération de la figure 2, dans lequel il est aussi prévu un capteur de pression, correspond sensiblement à une duplication des éléments de la figure 1, les nouveaux éléments en double portant la référence de l'élément correspondant d'origine, avec le suffixe "B". Il est ainsi formé deux cavités étanches 3 et 3B, ici accolées et séparées par une paroi 1A étanche, se terminant, côté opposé au fond, par un rebord 1B. Pour les jauges 21, 26, la différence avec la figure 1 consiste dans le fait que la membrane 2A, homologue de la membrane 2, est affectée exclusivement au détecteur d'accélération et ne porte donc plus la jauge de pression 26, celle-ci ayant été déportée sur la membrane 2B, ainsi affectée exclusivement au capteur de pression. En d'autres termes, cela revient, sur la figure 1, à séparer fictivement la membrane 2 en deux zones 2A, 2B sans mutuelle influence de déformation, c'est-à-dire que la membrane 2 serait solidaire d'une sorte de poutre rigide (1B), perpendiculaire au plan de la figure 1, séparant la zone 2A portant les éléments 21, 25, de celle, 2B, portant la jauge 26. Sur la figure 2, il s'agit de deux membranes 2A, 2B physiquement distinctes, chacune fixée en pourtour, en particulier sur le rebord 1B, pour fermer une ouverture correspondante du boîtier. Les deux jauges, de contrainte d'accélération 21 et de contrainte de pression 26, sont ainsi alors respectivement solidaires de deux membranes 2A, 2B élastiquement déformables en silicium, fermant le boîtier creux étanche 3, 3A. Pour s'affranchir de l'effet de la pression sur la membrane 2A de détection d'accélération, celle-ci peut présenter une résistance à la déformation plus élevée que celle de mesure de pression 2B, puisqu'il suffit de prévoir une masse d'épreuve 25 suffisante pour obtenir la sensibilité voulue. En outre, on peut aussi conserver l'étanchéité de la cavité 3A pour la détection de pression mais laisser la pression de l'air s'exercer des deux côtés de la membrane 2A de détection d'accélération, dans la cavité 3.

## Revendications

1. Détecteur d'accélération de pneumatique de véhicule automobile comportant une membrane (2, 2A) élastiquement déformable et, solidaires de la membrane (2, 2A), une masse d'épreuve (25), pour la déformer sous l'effet d'une accélération, une jauge de contrainte d'accélération (21) sensible aux déformations de la membrane (2, 2A) sous l'effet d'une force d'accélération exercée par la masse d'épreuve (25), **caractérisé par le fait qu'**il comporte une jauge (26), de contrainte de pression sensible à la pression du pneumatique, pour que le détecteur d'accélération constitue également un capteur de pression, et une chaîne de mesure de pression (11 - 13, 26 - 29) et une chaîne de détection d'accélération (11 - 13, 21 - 24) intégrées, au moins en partie, dans un circuit intégré, la chaîne de détection d'accélération étant agencée pour commander l'activation de la chaîne de mesure de pression (11 - 13, 26 - 29).

2. Détecteur selon la revendication 1, dans lequel les deux jauges de contrainte d'accélération (21) et de pression (26) sont solidaires de la même membrane (2) .

3. Détecteur selon la revendication 1, dans lequel les deux jauges de contrainte d'accélération (21), et de pression (26) sont respectivement solidaires de deux membranes élastiquement déformables (2A, 2B).

4. Détecteur selon l'une des revendications 1 à 3, constitué d'un composant disposé dans un boîtier creux étanche (3) fermé par la membrane (2).

5. Détecteur selon la revendication 3, constitué d'un composant disposé dans un boîtier creux étanche (3, 3A, 3B) fermé par les deux membranes (2A, 2B).

6. Capteur selon l'une des revendications 4 et 5, dans lequel les membranes (2, 2A, 2B) sont en silicium.

7. Détecteur selon l'une des revendications 1 à 6, dans lequel il est prévu un circuit multiplexeur (12) commun aux deux chaînes (11 - 13, 21 - 24, 26 - 29) pour fournir, à un circuit (11 - 13) de traitement des mesures commandant un circuit de contrôle (14), des mesures de pression, des mesures d'accélération, des mesures de température d'un thermomètre (30) et des mesures de la tension d'une pile d'alimentation (31).

## Claims

1. Acceleration sensor for a motor vehicle tyre, comprising an elastically deformable membrane (2, 2A) and, fast connected with the membrane (2, 2A), a test mass (25), to deform it under the effect of an acceleration, an acceleration strain gauge (21) sensitive to the deformations of the membrane (2, 2A) under the effect of an acceleration force exerted by the test mass (25), **characterised in that** it includes a pressure strain gauge (26) sensitive to the pressure of the tyre, so that the acceleration sensor also constitutes a pressure sensor, and a pressure measuring chain (11-13, 26-29) and an acceleration detection chain (11-13, 21-24) which are integrated, at least partially, into an integrated circuit, the acceleration detection chain being arranged to control the activation of the pressure measuring chain (11-13, 26-29).

2. Sensor according to claim 1, wherein the two gauges, the acceleration strain gauge (21) and the pressure strain gauge (26), are fast connected with the same membrane (2).

3. Sensor according to claim 1, wherein the two gauges, the acceleration strain gauge (21) and the pressure strain gauge (26), are respectively fast connected with two elastically deformable membranes (2A, 2B).

4. Sensor according to one of claims 1 to 3, made up of a component disposed in a hollow sealed housing (3) closed by the membrane (2).

5. Sensor according to claim 3, made up of a component disposed in a hollow sealed housing (3, 3A, 3B) closed by the two membranes (2A, 2B).

6. Sensor according to one of claims 4 and 5, wherein the membranes (2, 2A, 2B) are formed from silicon.

7. Sensor according to one of claims 1 to 6, wherein a multiplexer circuit (12) is provided common to the two chains (11-13, 21-24, 26-29) to supply, to a measurement processing circuit controlling a control circuit (14), pressure measurements, acceleration measurements, temperature measurements from a thermometer (30) and measurements of the voltage of a power-supply battery (31).

## Patentansprüche

1. Beschleunigungsdetektor für Kraftfahrzeugreifen, aufweisend eine elastisch verformbare Membran (2, 2A) und eine mit der Membran (2, 2A) fest verbundene Probenmasse (25) zum Verformen der Membran unter Einfluß einer Beschleunigung, einen Beschleunigungsmeßstreifen (21), der auf Verformungen der Membran (2, 2A) unter Einfluß einer von der Probenmasse (25) ausgeübten Beschleunigungskraft anspricht, **dadurch gekennzeichnet, daß** er einen auf den Druck des Reifens ansprechenden Druckmeßstreifen (26) aufweist, damit der Beschleunigungsdetektor auch einen Druckaufnehmer bildet, und eine Druckmeßschaltung (11-13, 26-29) und eine Beschleunigungsdetektorschaltung (11-13, 21-24) aufweist, die wenigstens teilweise in eine integrierte Schaltung integriert sind, wobei die Beschleunigungsdetektorschaltung so eingerichtet ist, daß sie die Aktivierung der Druckmeßschaltung (11-13, 26-29) steuert.

2. Detektor nach Anspruch 1, wobei die beiden Beschleunigungs- (21) und Druck- (26) -meßstreifen mit derselben Membran (2) fest verbunden sind.

3. Detektor nach Anspruch 1, wobei die beiden Beschleunigungs- (21) und Druck- (26) -meßstreifen jeweils mit einer von zwei elastisch verformbaren Membranen (2A, 2B) fest verbunden sind.

4. Detektor nach einem der Ansprüche 1 bis 3, gebildet von einer Anordnung, die in einem abgedichteten Gehäuse-Hohlraum (3) angeordnet ist, der von der Membran (2) geschlossen ist.

5. Detektor nach Anspruch 3, gebildet von einer Anordnung, die in einem abgedichteten Gehäuse-Hohlraum (3, 3A, 3B) angeordnet ist, der von den beiden Membranen (2A, 2B) geschlossen ist.

6. Detektor nach einem der Ansprüche 4 und 5, wobei die Membran (2, 2A, 2B) aus Silizium besteht.

7. Detektor nach einem der Ansprüche 1 bis 6, wobei er eine beiden Schaltungen (11-13, 21-24, 26-29) gemeinsame Multiplexerschaltung (12) aufweist, um an eine die Meßwerte verarbeitende Schaltung (11-13), die eine Steuerschaltung (14) steuert, die Druckmeßwerte, Beschleunigungsmeßwerte, Temperaturmeßwerte eines Thermometers (30) und Spannungsmeßwerte einer Spannungsversorgung (31) anzulegen.
